# EUROPÄISCHE PATENTANMELDUNG

(11) **EP 3 203 421 A1**
(43) Veröffentlichungstag der Anmeldung: **09.08.2017**
(21) Anmeldenummer: 16154441.6
(22) Anmeldetag: 05.02.2016
(51) Int. Cl.: G06Q 10/04, G06Q 10/08, G06Q 50/30, G08G 1/127

(54) **VERFAHREN ZUM TRANSPORTIEREN EINER VIELZAHL VON OBJEKTEN ZWISCHEN OBJEKTSPEZIFISCHEN ORTEN**

(71) Anmelder: Max-Planck-Gesellschaft zur Förderung der Wissenschaften e.V., 80539 München (DE)
(72) Erfinder: Herminghaus, Stephan, 37073 Göttingen (DE); Timme, Marc, 37083 Göttingen (DE); Sorge, Andreas, 38100 Braunschweig (DE); Wendland, Matthias, 37085 Göttingen (DE); Kassel, Johannes, 37075 Göttingen (DE)
(74) Vertreter: REHBERG HÜPPE + PARTNER

(57) **Zusammenfassung**

Zum Transportieren einer Vielzahl von Objekten mit mehreren Transportfahrzeugen werden zu jedem Objekt ein Startort und ein Zielort sowie eine jeweils zugehörige Startzeit und/oder Zielzeit als Objektkoordinaten in einer Raumzeit sowie zu jedem Transportfahrzeug eine Transportkapazität und ein Istort notiert. Ein Transportwegenetz von möglichen Transportwegen der Transportfahrzeuge mit Durchschnittsgeschwindigkeiten der Transportfahrzeuge auf den Transportwegen wird definiert, und anhand des Transportwegenetzes werden für jedes Objekt passende aller möglichen Transportwege zwischen seinen Objektkoordinaten ermittelt und in der Raumzeit notiert. In der Raumzeit werden passende Transportwege für verschiedene Objekte zu Fahrtrouten einzelner Transportfahrzeuge gebündelt, wobei die Transportkapazitäten und die Istorte der Transportfahrzeuge beachtet werden, und die Fahrtrouten mit den Startorten, den Startzeiten, den Zielorten und den Zielzeiten der zugehörigen Objekte werden zum Abfahren an die beteiligten Transportfahrzeuge übermittelt.

## Beschreibung

### TECHNISCHES GEBIET DER ERFINDUNG

Die Erfindung bezieht sich auf ein Verfahren zum Transportieren einer Vielzahl von Objekten mit mehreren Transportfahrzeugen, wobei zu jedem Objekt ein Startort und ein Zielort sowie eine Startzeit und/oder eine Zielzeit notiert werden, sowie mit den weiteren Merkmalen des Oberbegriffs des unabhängigen Patentanspruchs 1. Weiterhin bezieht sich die Erfindung auf einen Datenserver zur Durchführung eines solchen Verfahrens.

### STAND DER TECHNIK

Im Durchschnitt führt jeder Einwohner Deutschlands pro Tag zwei Fahrten mit Verkehrsmitteln durch. In der Summe sind dies 160 Mio. Fahrten täglich, für die zumeist mit nur wenigen Personen besetzte private PKW genutzt werden. Nur wer bereit ist, zur nächsten Haltestelle zu laufen, einige Zeit in einem Linienverkehrsmittel zuzubringen und nach dem Aussteigen noch einmal von der Haltestelle bis zu seinem eigentlichen Ziel zu laufen, nutzt den öffentlichen Personennahverkehr. Wer über keinen privaten PKW verfügt oder diesen nicht nutzen will und durchgängig von seinem Startort zu seinem Zielort gefahren werden möchte, kann auch ein Taxi rufen. Hierfür fallen jedoch erheblich höhere Fahrtkosten als im öffentlichen Personennahverkehr an.

Seit längerem ist die Idee bekannt, mit Hilfe flexibler Kleinbusse, die an keine feste Strecke gebunden sind, sondern die jede Person zeitnah an ihrem Startort abholen und zu ihrem Zielort bringen, einen Taxi-ähnlichen Service bereitzustellen, dessen Fahrpreis aber durch die Aufteilung der Kosten auf mehrere zugleich beförderte Personen deutlich unter denjenigen eines Taxis liegt und in den Bereich der zusätzlichen Betriebskosten eines privaten PKW für die jeweilige Fahrt fällt. Derartige Konzepte werden auch als Anrufbus oder Rufbus bezeichnet. Es ist bislang aber noch nicht gelungen, die Fahrtrouten von Anrufbussen standardisiert oder gar automatisiert so festzulegen, dass die Anrufbusse einerseits gut ausgelastet sind, um die auf jede beförderte Person entfallenden Fahrtkosten niedrig zu halten, und andererseits die Transportzeiten für alle transportierten Personen ähnlich kurz bleiben wie bei Nutzung privater PKW. Bisherige Anrufbusse werden daher nur schwach nachgefragt und können daher nicht kostendeckend arbeiten.

S. Herminghaus, Mean-field theory of demand-driven public transportation, Complex Fluids Internal Notes, Issue 45 (February 2015) diskutiert die Bedingungen, unter denen ein Anrufbuskonzept kostendeckend zu betreiben wäre. Es werden auch grundsätzliche Konzepte zur Optimierung der Fahrtrouten der beteiligten Fahrzeuge beschrieben, die die Merkmale des Oberbegriffs des unabhängigen Patentanspruchs 1 aufweisen. Die konkrete Optimierung der Fahrtrouten nach dem beschriebenen Konzept stellt sich aber weiterhin als äußerst komplex dar.

Auf der Website www.bridj.com wird ein Bustransportsystem beschrieben, bei dem das Angebot an Buslinien zwischen Startorten und Zielorten an den Bedarf der Passagiere angepasst wird. Dieser Bedarf wird unter Verwendung von GPS-Daten aus Handys, Posts auf sozialen Medien und dergleichen ermittelt.

### AUFGABE DER ERFINDUNG

Der Erfindung liegt die Aufgabe zugrunde, ein Verfahren zum Transportieren einer Vielzahl von Objekten mit mehreren Transportfahrzeugen zwischen objektspezifischen Orten aufzuzeigen, das mit beherrschbarem Aufwand die Fahrtrouten der Transportfahrzeuge so optimiert, dass diese einerseits gut ausgelastet sind und andererseits vorgegebene Start- und/oder Zielzeiten der transportierten Objekte gut eingehalten werden.

### LÖSUNG

Die Aufgabe der Erfindung wird durch ein Verfahren mit den Merkmalen des unabhängigen Patentanspruchs 1 gelöst. Die abhängigen Patentansprüche 2 bis 11 betreffen bevorzugte Ausführungsformen des erfindungsgemäßen Verfahrens. Der Patentanspruch 12 ist auf einen Datenserver zur Durchführung des erfindungsgemäßen Verfahrens gerichtet. Die abhängigen Patentansprüche 13 bis 15 betreffen bevorzugte Ausführungsformen des Datenservers.

### BESCHREIBUNG DER ERFINDUNG

Das erfindungsgemäße Verfahren geht von einem Verfahren zum Transportieren einer Vielzahl von Objekten mit mehreren Transportfahrzeugen aus, wobei zu jedem Objekt ein Startort und ein Zielort sowie eine Startzeit und/oder eine Zielzeit notiert werden. Weiter werden dabei zu jedem Transportfahrzeug eine Transportkapazität und ein Istort notiert, und ein Transportwegenetz von möglichen Transportwegen der Transportfahrzeuge mit Durchschnittsgeschwindigkeiten der Transportfahrzeuge auf den Transportwegen wird definiert. Erfindungsgemäß werden für jedes Objekt sein Startort und sein Zielort sowie die jeweils zugehörige Startzeit und/oder Zielzeit als Objektkoordinaten in einer Raumzeit notiert. Dann werden für jedes Objekt anhand des Transportwegenetzes passende aller möglichen Transportwege zwischen seinen Objektkoordinaten ermittelt und in der Raumzeit notiert. In der Raumzeit werden passende Transportwege für verschiedene Objekte zu Fahrtrouten einzelner Transportfahrzeuge gebündelt, wobei die Transportkapazität und die Istorte der Transportfahrzeuge beachtet werden. Die Fahrtrouten mit den Startorten, den Startzeiten, den Zielorten und den Zielzeiten der zugehörigen Objekte werden an die beteiligten Transportfahrzeuge übermittelt, die diese Fahrtrouten dann abfahren.

Ein Kern des erfindungsgemäßen Verfahrens ist das Angehen der Optimierung der von den einzelnen Transportfahrzeugen abzufahrenden Fahrtrouten in einer Raumzeit. In dieser Raumzeit, die neben den räumlichen Koordinaten der Startorte und der Zielorte sowie der dazwischen verlaufenden passenden Transportwege auch die Zeit als Koordinate berücksichtigt, sind die überhaupt nur möglichen und insbesondere die möglicherweise sinnvollen Fahrtrouten als Bündel von Transportwegen verschiedener Objekte leicht auszumachen. Insbesondere sind in der Raumzeit verschiedene Bündelungen von Fahrtrouten mit beherrschbarem Aufwand miteinander vergleichbar, um die Optimierung der Fahrtrouten für alle beteiligten Transportfahrzeuge zu betreiben. Konkret können mögliche Transportwege für verschiedene Objekte nach ihren Abständen in der Raumzeit für eine potentielle Bündelung als passende Transportwege gruppiert oder umgekehrt aufgrund ihrer Abstände in der Raumzeit direkt von einer solchen Bündelung ausgeschlossen werden. Da das Transportwegenetz regelmäßig ein zweidimensionales Transportwegenetz längs der Erdoberfläche ist oder zumindest als in der Projektion auf die Erdoberfläche zweidimensionales Transportwegenetz betrachtet werden kann, ist die bei dem erfindungsgemäßen Verfahren zu verwendende Raumzeit ein nur dreidimensionaler Raum. So bleiben die Notierung der Objektkoordinaten und der Transportwege sowie der Vergleich der Transportwege in der Raumzeit beherrschbar. Die Verläufe der Transportwege und deren erfindungsgemäßes Bündeln in dieser dreidimensionalen Raumzeit ist zudem sehr anschaulich, so dass das erfindungsgemäße Verfahren nicht nur vollautomatisch, sondern auch zumindest teilweise manuell durchgeführt werden kann, beispielsweise im Umfang des Bündelns der passenden Transportwege für verschiedene Objekte.

Ebenso wie die Startorte und Zielorte sowie die zugehörigen Startzeiten und/oder Zielzeiten der Objekte als Objektkoordinaten in der Raumzeit notiert werden, können auch die Istorte der Transportfahrzeuge mit der aktuellen Zeit als Fahrzeugkoordinaten in der Raumzeit notiert werden. Dann können die Istorte der Transportfahrzeuge beachtet werden, indem anhand des Transportwegenetzes passende aller möglichen Transportwege zwischen den Fahrzeugkoordinaten und benachbarten Startorten und zugehörigen Startzeiten in der Raumzeit ermittelt, in der Raumzeit notiert und beim Bündeln in der Raumzeit einbezogen werden. Die Istorte der Transportfahrzeuge und die aktuelle Zeit werden damit grundsätzlich genauso in der Raumzeit berücksichtigt, wie die Objektkoordinaten der zu transportierenden Objekte.

Das Notieren in der Raumzeit ermöglicht es, Zeiträume, die zum Aufnehmen eines Objekts in ein Transportfahrzeug und zum Ausgeben eines Objekts aus einem Transportfahrzeug benötigt werden, auf einfache Weise zu berücksichtigen, indem sie in der Raumzeit notiert und beim Notieren der passenden Transportwege für die Objekte in der Raumzeit berücksichtigt werden. Es versteht sich, dass die genannten Zeiträume auch von der Art der zu befördernden Objekte abhängen. So können Passagiere, d. h. Menschen selbständig in ein Transportfahrzeug einsteigen und daraus aussteigen sowie dessen Haltepunkte am Straßenrand aufsuchen und von dort ihr eigentliches Ziel erreichen. Für zu befördernde Güter, z. B. Pakete, gilt dies alles nicht.

Vorzugsweise werden die Startzeiten und/oder Zielzeiten der Objekte in der Raumzeit als Zeitfenster notiert, d. h. nicht als Zeitpunkte. Dabei kann das Zeitfenster durch einen Zeitpunkt und einen Toleranzbereich definiert werden, wobei sich der Toleranzbereich beiderseits des Zeitpunkts oder auch nur auf einer Seite des Zeitpunkts erstrecken kann. Letzteres bedeutet dann beispielsweise eine Startzeit oder eine Zielzeit ab dem Zeitpunkt bis zu dem Zeitpunkt plus dem Toleranzbereich. Die Zeitfenster können mit individueller Breite notiert werden. So kann für ein spezielles Objekt ein sehr enges Zeitfenster notiert werden, weil es beispielsweise zu einem bestimmten Zeitpunkt in ein Transportfahrzeug aufgenommen oder aus dem Transportfahrzeug ausgegeben werden soll, während anderen Objekten sehr breite Zeitfenster zugeordnet werden, deren tatsächliche Aufnahme- oder Ausgabezeitpunkte weniger kritisch sind.

Wenn für ein zu beförderndes Objekt neben seinem Startort und seinem Zielort nur eine Startzeit oder eine Zielzeit notiert wird, ergibt sich die andere Start- oder Zielzeit aus den möglichen Transportwegen zwischen dem Startort und dem Zielort und den zugehörigen Durchschnittsgeschwindigkeiten der Transportfahrzeuge auf den Transportwegen. Wenn sowohl eine Startzeit als auch eine Zielzeit notiert wird, schränkt dies die möglichen Transportwege aus solche ein, die in der Zeitdifferenz zwischen Zielzeit und Startzeit zurückgelegt werden können.

Das erfindungsgemäße Verfahren kann auch Linienverkehrsmittel in den Transport einbinden. Dies gilt insbesondere für Passagiere als zu transportierende Objekte. Für die Einbindung können die Startorte und Zielorte sowie die Startzeiten und Zielzeiten vorhandener Linienverkehrsmittel, die innerhalb von Zeiträumen zwischen den Startzeiten und den Zielzeiten der zu transportierenden Objekte liegen, zusätzlich in der Raumzeit notiert und in die Ermittlung passender Transportwege dergestalt einbezogen werden, dass die Linienverkehrsmittel Teilstrecken des jeweiligen Transportwegs übernehmen.

Zu den Transportfahrzeugen wird die Transportkapazität vorzugsweise in Form einer bestimmten Anzahl von Objekten notiert, die maximal transportiert werden kann. Diese Anzahl von Objekten kann für alle Transportfahrzeuge mit demselben Wert notiert werden, wodurch die Optimierung der Fahrtrouten vereinfacht wird. Grundsätzlich können die Transportkapazitäten aber auch in andern Einheiten als der Anzahl der Objekte und für jedes Transportfahrzeug individuell notiert werden.

Um die Komplexität der Optimierungsaufgabe im Hinblick auf das Transportwegenetz und die daraus resultierenden passenden Transportwege zu reduzieren, können in dem Transportwegenetz Knotenpunkte verbindende Hauptwege definiert werden. Dann können die möglichen Transportwege beim Ermitteln passender aller möglichen Transportwege für jedes Objekt auf solche eingeschränkt werden, die von dem Startort des Objekts zu einem der nächstliegenden Knotenpunkte, von einem der nächstliegenden Knotenpunkte zu dem Zielort des Objekts und zwischen diesen Knotenpunkten ausschließlich auf den Hauptwegen verlaufen. Diese Priorisierung der Hauptwege reduziert die miteinander zu vergleichende Anzahl der passenden Transportwege ganz erheblich. Es versteht sich aber, dass auch bei dieser Ausführungsform der Erfindung für nahe beieinanderliegende Startorte und Zielorte auch passende Transportwege ermittelt werden, die nicht über Hauptwege oder nicht einmal über die Knotenpunkte verlaufen.

Die voranstehend skizzierte Hierarchie der Transportwege kann bei dem erfindungsgemäßen Verfahren um mindestens eine weitere Ebene erweitert werden. Dazu können in dem Transportwegenetz Knotenzentren verbindende Hauptstrecken definiert werden, und beim Ermitteln passender aller möglichen Transportwege für jedes Objekt anhand des Transportwegenetzes können die möglichen Hauptwege auf solche eingeschränkt werden, die von dem einen der dem Startort nächstliegenden Knotenpunkte zu einem der diesem Knotenpunkt nächstliegenden Knotenzentren, zu dem einen der dem Zielort nächstliegenden Knotenpunkte von einem der diesem Knotenpunkt nächstliegenden Knotenzentren und zwischen den Knotenzentren ausschließlich auf den Hauptstrecken verlaufen. Als diese Hauptstrecken können zum Beispiel die Fahrtstrecken von Linienverkehrsmitteln berücksichtigt werden. Es versteht sich aber auch hier, dass bei dieser Ausführungsform der Erfindung für näher beieinanderliegende Startorte und Zielorte auch passende Transportwege ermittelt werden, die nicht über Hauptstrecken oder nicht einmal über die Knotenzentren verlaufen.

Die durch die Priorisierung bestimmter Transportwege reduzierte Anzahl der miteinander zu vergleichenden passenden Transportwege ist entscheidend, wenn beim Bündeln von passenden Transportwegen verschiedener Objekte unterschiedliche Kombinationen möglicher Fahrtrouten einzelner Transportfahrzeuge zusammengestellt und miteinander verglichen werden. Die dabei auftretende Anzahl der Vergleiche wird durch die Beschränkung der passenden Transportwege erheblich beschränkt und dadurch möglicherweise überhaupt erst beherrschbar.

Die Kriterien, nach denen beim Bündeln von passenden Transportwegen für verschiedene Objekte zu Fahrtrouten eine Optimierung betrieben wird, können insbesondere die Folgenden umfassen:
- Einhaltung der Startzeiten und/oder der Zielzeiten zumindest bestimmter der Objekte,
- minimierte Abweichungen von den Startzeiten und/oder den Zielzeiten aller Objekte,
- maximierte mittlere Auslastung der Transportkapazität der genutzten Transportfahrzeuge,
- minimierte Fahrtstrecken der genutzten Transportfahrzeuge,
- minimierte Betriebszeiten der genutzten Transportfahrzeuge,
- minimierte Betriebskosten der genutzten Transportfahrzeuge.

Diese Kriterien können einzeln oder in Kombination zur Anwendung kommen. Wenn sie in Kombination angewendet werden, können sie mit Wichtungsfaktoren zueinander gewichtet werden. Eine solche Wichtung kann auch für einzelne Objekte oder Transportfahrzeuge vorgenommen werden. So können beispielsweise bestimmte der Transportfahrzeuge vornehmlich ausgelastet werden und/oder bestimmte Objekte unter bevorzugter Einhaltung der Startzeiten und/oder der Zielzeiten transportiert werden, weil hierfür ein höheres Transportentgelt entrichtet wird als für andere Objekte. Bei einer Minimierung der Betriebskosten der genutzten Transportfahrzeuge sind regelmäßig auch die Personalkosten von Fahrern der Transportfahrzeuge zu berücksichtigen.

Eine andere Möglichkeit, eine Optimierung in Hinblick auf mehrere Kriterien gleichzeitig durchzuführen, ist das Aufsuchen eines sogenannten Pareto-Optimum. Dies ist ein Punkt, an dem alle Kriterien in dem Sinne gleichzeitig optimal erfüllt sind, dass es keine Möglichkeit mehr gibt, die Erfüllung eines Kriterium weiter zu optimieren, ohne die Erfüllung eines anderen zu verschlechtern.

Das erfindungsgemäße Verfahren kann auch neu hinzukommende zu transportierende Objekte berücksichtigen. Praktisch wird das erfindungsgemäße Verfahren sogar nur selten so durchgeführt werden, dass während des Abfahrens der Fahrtrouten keine zu transportierenden Objekte neu hinzukommen. Konkret werden bei hinzukommenden zu transportierenden Objekten deren Standorte, Zielorte, Startzeiten und/oder Zielzeiten sowie passende Transportwege ergänzt, und das Bündeln zu den Transportrouten wird unter Berücksichtigung der aktuellen Istorte der Transportfahrzeuge, ihrer aktuellen Beladung mit Objekten und deren Zielorten und/oder Zielzeiten erneut durchgeführt. Sich daraus ergebende neue Fahrtrouten werden an die beteiligten Transportfahrzeuge übermittelt. Auf diese Weise kann es zu Änderungen der Fahrtrouten der Transportfahrzeuge kommen, um ein hinzugekommenes zu transportierendes Objekt aufzunehmen und auch wieder auszugeben.

Das erneute Durchführen des Bündelns von passenden der möglichen Transportwege der verschiedenen Objekte kann ebenso wie das ursprüngliche Bündeln der Transportwege zulassen, dass ein oder mehrere Objekte von einem Transportfahrzeug auf ein anderes Transportfahrzeug wechseln. Ein solcher Wechsel kann jedoch auch gezielt vermieden oder zumindest in seiner Anzahl klein gehalten, also beispielsweise auf maximal ein, zwei oder drei Wechsel beschränkt werden, um die mit dem Zusammenführen von zwei Transportfahrzeugen in der Raumzeit verbundenen zusätzlichen Anforderungen möglichst zu vermeiden, und auch, um den Aufwand und die Unannehmlichkeiten zu vermeiden, die mit jedem Wechsel eines Objekts zwischen den Transportfahrzeugen verbunden sind. Dies gilt insbesondere dann, wenn es sich bei den zu transportierenden Objekten um Passagiere handelt, denen eine möglichst Taxi-ähnliche Alternative zum öffentlichen Personennahverkehr geboten werden soll. Dies ist mit häufigen Umstiegen zwischen den Transportfahrzeugen nicht kompatibel.

Unabhängig davon, ob bei dem erfindungsgemäßen Verfahren Passagiere oder Güter als Objekte transportiert werden, werden die erfolgten Transporte der Objekte mit den Transportfahrzeugen vorzugsweise erfasst und mit einem nach einem Tarif vorgegebenen Kostenwert verknüpft. Dieser Kostenwert kann dann den Fahrpreis bestimmen, den ein Passagier zu entrichten hat. Beispielsweise kann der Passagier den Fahrpreis direkt an den Fahrer des Transportfahrzeugs zahlen. Optional kann der Kostenwert an mindestens eine Transportkostenabrechnungseinheit übermittelt werden, die dann zum Beispiel den Fahrpreis des Passagiers oder die Frachtkosten für Güter bargeldlos einzieht.

Ein Datenserver zur Durchführung des erfindungsgemäßen Verfahrens weist mindestens eine Schnittstelle zum Empfangen von Startorten, Zielorten, Startzeiten und/oder Zielzeiten einer Vielzahl von Objekten und von Istorten einer Mehrzahl von Transportfahrzeugen auf. Weiterhin umfasst der Datenserver eine Datenbank zum Speichern eines Transportwegenetzes von möglichen Transportwegen der Transportfahrzeuge mit Durchschnittsgeschwindigkeiten der Transportfahrzeuge auf den Transportwegen. Darüber hinaus ist die mindestens eine oder eine weitere Schnittstelle zum Ausgeben von Fahrtrouten an beteiligte Transportfahrzeuge vorgesehen. Dabei ist der Server zur Durchführung des erfindungsgemäßen Verfahrens programmiert. Der erfindungsgemäße Datenserver setzt das erfindungsgemäße Verfahren an zentraler Stelle um, um die verfügbaren Transportfahrzeuge in Bezug auf den Transport der zu transportierenden Objekte zu koordinieren. Jede Schnittstelle des erfindungsgemäßen Datenservers kann durch jegliche bekannte Telekommunikationsschnittstelle realisiert sein, die das angegebene Empfangen bzw. Ausgeben von Daten erlaubt. Diese Schnittstelle muss nicht speziell dem erfindungsgemäßen Datenserver zugeordnet sein, sondern nur an den Teil des Datenservers angeschlossen sein, auf dem das das erfindungsgemäße Verfahren umsetzende Programm läuft. Bei der weiteren Schnittstelle zum Ausgeben von Fahrtrouten kann es sich praktisch um dieselbe mindestens eine Schnittstelle wie zum Empfangen von Startorten und Zielorten sowie Startzeiten und/oder Zielzeiten der Objekte und zum Empfangen von Istorten der Transportfahrzeuge handeln, und diese eine Schnittstelle kann durch einen Internetzugang realisiert sein.

Konkret kann bei dem erfindungsgemäßen Datenserver jede Schnittstelle zum Empfangen bzw. zum Ausgeben zur Datenkommunikation mit mobilen Endgeräten ausgebildet sein. Diese mobilen Endgeräte können Tablets, Mobiltelefone, Smartphones und/oder PDAs (Personal Digital Assistants) umfassen. So kann ein Passagier als zu transportierendes Objekt seine Objektdaten über sein Mobiltelefon an den Datenserver übermitteln. Über dasselbe Mobiltelefon kann der Passagier eine Bestätigung seiner Objektdaten erhalten. Das Mobiltelefon eines Fahrers eines Transportfahrzeugs kann hingegen fortlaufend den Istort des Transportfahrzeugs an den Datenserver übermitteln und im Gegenzug die Fahrtroute für das jeweilige Transportfahrzeug erhalten. Diese Fahrtroute kann direkt als Navigationsanzeige ausgegeben werden, um den Fahrer des Transportfahrzeugs entlang der Fahrtroute mit den darauf liegenden Startorten und Zielorten zu führen.

Insbesondere kann jede Schnittstelle des erfindungsgemäßen Datenservers zur Datenkommunikation mit dem jeweiligen mobilen Endgerät über ein Anwenderprogramm ausgebildet sein, das auf dem jeweiligen mobilen Endgerät programmiert ist. Ein solches Anwenderprogramm vereinfacht die Datenkommunikation mit dem jeweiligen Benutzer, d. h. einem Passagier oder Fahrer eines der Transportfahrzeuge. Solche Anwenderprogramme werden auch als App bezeichnet.

Der erfindungsgemäße Datenserver kann weiterhin eine Schnittstelle zum Übermitteln eines Kostenwerts eines erfolgten Transports an mindestens eine Transportkostenabrechnungseinheit aufweisen. Die Schnittstelle kann eine auch anderweitig genutzte oder eine zusätzliche Schnittstelle des Datenservers sein. Bei der Transportkostenabrechnungseinheit kann es sich um einen Mobilfunkanbieter des Betreibers des jeweiligen mobilen Endgeräts handeln. So kann insbesondere der Fahrpreis, den ein Passagier zu entrichten hat, mit dessen Mobiltelefonrechnung erhoben werden.

Für die praktische Umsetzung der vorliegenden Erfindung kann es sinnvoll sein, dass sich jedes Transportfahrzeug bei der Annäherung an einen Startort eines der von ihm zu transportierenden Objekte für dieses Objekt, insbesondere einen Passagier, von außen sichtbar zu erkennen gibt. Dies gilt zumindest dann, wenn im selben Gebiet zur selben Zeit mehrere solcher Transportfahrzeuge unterwegs sind, so dass es für die Passagiere und auch die Fahrer der Transportfahrzeuge schwierig wird, die richtige Zuordnung zu treffen. Eine Möglichkeit, diesem Problem zu begegnen, ist es, den Namen des als nächstes aufzunehmenden Passagiers nach außen auf einem großen Display anzuzeigen. Zum Persönlichkeitsschutz kann dabei vorsehen sein, dass sich jeder Passagier - optional tagesaktuell - einen Spitznamen wählt. Zur Umsetzung dieses Konzepts kann eine Schnittstelle zum Übermitteln von Objektdaten zu den Objekten an ein Anzeigegerät vorgesehen sein, das sich in oder an dem den Transport der jeweiligen Objekte durchführenden Transportfahrzeug befindet.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt Objektkoordinaten mit zugehörigen zu Transportrouten gebündelten Transportwegen.
- **Fig. 2**: illustriert schematisch die Definition von Knotenpunkte verbindenden Transportwegen eines Transportwegenetzes.
- **Fig. 3**: illustriert die Preis-Nachfragedynamik bei einem Anrufbus.
- **Fig. 4**: ist ein Ablaufdiagramm des erfindungsgemäßen Verfahrens; und
- **Fig. 5**: ist ein Blockdiagramm des erfindungsgemäßen Datenservers.

### FIGURENBESCHREIBUNG

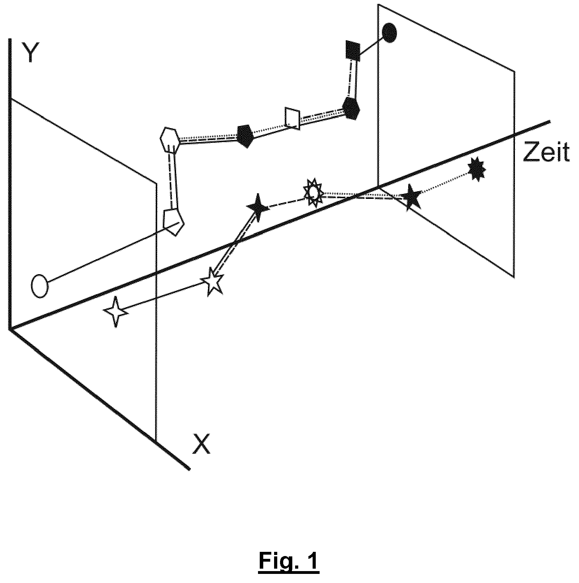

**Fig. 1** illustriert das Notieren von Objektkoordinaten zu zu transportierenden Objekten in einer Raumzeit, wobei in x- und y-Richtung die räumlichen Koordinaten des jeweiligen Startorts mit einem offenen Symbol angegeben sind, während das gleiche geschlossene Symbol den Zielort markiert. Die zugehörigen Startzeiten und Zielzeiten sind in der dritten Raumrichtung entlang der Zeit-Achse notiert. Mögliche Transportwege zwischen den Startorten und Zielorten werden durch ein hier nicht gezeigtes Transportwegenetz vorgegeben. Dieses Transportwegenetz beschreibt nicht nur den Verlauf dieser Transportwege in x- und y-Richtung, sondern auch die Durchschnittsgeschwindigkeiten der Transportfahrzeuge auf den Transportwegen und grenzt damit die in der Raumzeit auch zeitlich möglichen Transportwege ein. In der Raumzeit zu verschiedenen Objekten passende aller möglichen Transportwege werden zu Fahrtrouten einzelner Transportfahrzeuge gebündelt, wobei die Transportkapazitäten und die Istorte der Transportfahrzeuge beachtet werden. In Fig. 1 sind zwei solcher Bündel von Transportwegen, die hier auch als Fahrtrouten bezeichnet werden, für zwei verschiedene Transportfahrzeuge dargestellt. Die eine Transportroute für das eine Transportfahrzeug beginnt an dem offenen Kreis und endet an dem geschlossenen Kreis, während die andere Transportroute für das andere Transportfahrzeug an dem offenen vierzackigen Stern beginnt und an der geschlossenen Sonne endet. Längs dieser Transportrouten finden sich verschiedene Objektkoordinaten immer in der richtigen Reihenfolge von Startort mit zugehöriger Startzeit vor Zielort mit zugehöriger Zielzeit.

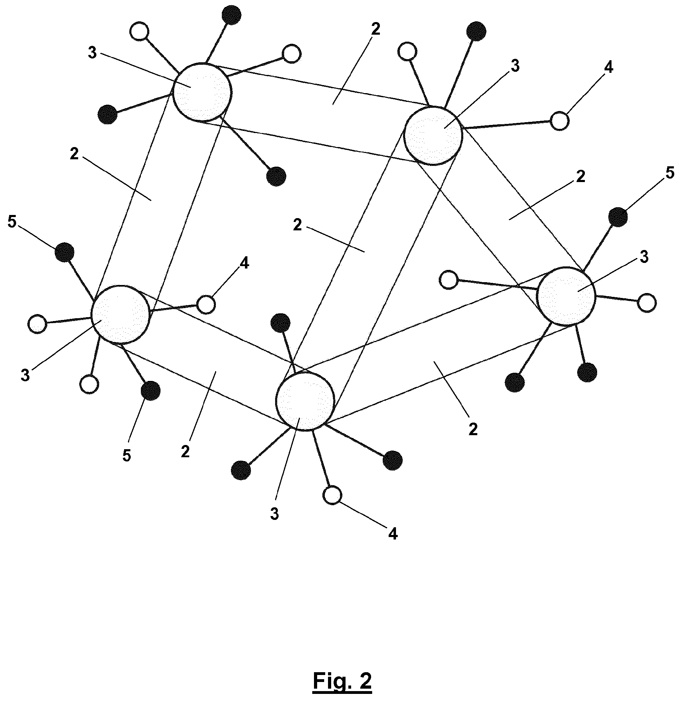

Beim Bündeln der passenden Transportwege verschiedener Objekte zu den Fahrtrouten für die einzelnen Transportfahrzeuge wird eine Optimierung durchgeführt. Bei dieser Optimierung werden insbesondere Bewertungen für verschiedene Bündelungen verschiedener passender Transportwege miteinander verglichen. Um dabei die Anzahl der passenden Transportwege zu beschränken, kommt ein Transportwegenetz zur Ermittlung der passenden Transportwege zur Anwendung, in dem, wie **Fig. 2** illustriert, Hauptwege 2 definiert sind, die Knotenpunkte 3 miteinander verbinden. Beim Ermitteln der passenden aller möglichen Transportwege für jedes Objekt anhand des in Fig. 2 skizzierten Transportwegenetzes werden die möglichen Transportwege auf solche eingeschränkt, die von dem Startort 4 des jeweiligen Objekts zu einem der nächstliegenden Knotenpunkte 3 und von dort über Hauptwege 2 bis zu einem der dem Zielort 5 des jeweiligen Objekts nächstliegenden Knotenpunkte 3 führen. Dabei kann jeweils auch nur der tatsächlich nächstliegende Knotenpunkt 3 für den jeweiligen Startort 4 oder Zielort 5 Berücksichtigung finden, oder ein Startort 4 bzw. Zielort 5 wird alternativ mehreren Knotenpunkten zugeordnet, womit die Anzahl der passenden Transportwege aber exponentiell ansteigt.

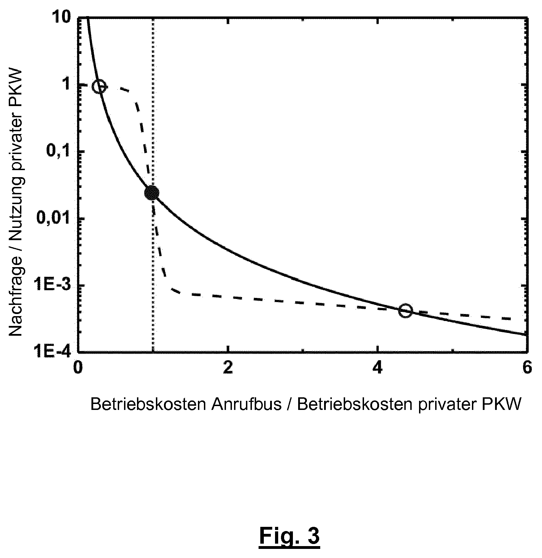

In **Fig. 3** ist mit durchgezogener Linie eine relative Nachfrage aufgetragen, die bei einem im Verhältnis zu den Kosten eines privaten PKW angegebenen Fahrpreis für einen kostendeckenden Betrieb eines Anrufbusses nötig wäre. Die gestrichelte Kurve gibt einen geschätzten Preis-Nachfrage-Zusammenhang an. Wenn sich der Fahrpreis an die Kosten eines eigenen PKW, die mit einer punktierten Linie angegeben sind, von rechts annähert, steigt die Nachfrage stark an; in jedem Bereich, in dem die gestrichelte Kurve über der durchgezogenen Kurve liegt, ist ein kostendeckender Betrieb des Anrufbusses zu erwarten. Die logarithmische Darstellung der Nachfrage zeigt, dass der geschätzte Preis-Nachfrage-Zusammenhang nicht sehr genau sein muss, um zu demonstrieren, dass man drei Schnittpunkte der beiden Kurven erhält. Dabei steht jedoch der mittlere Schnittpunkt für einen instabilen Operationspunkt. Steigt an diesem der Fahrpreis an, d. h. in Fig. 3 nach rechts, fällt die Nachfrage schnell ab, und das System läuft nach kurzer Zeit auf den rechten Schnittpunkt zu. Dies ist zwar ein stabiler Operationspunkt. Er bezeichnet aber nur einen Nischenmarkt mit einem Fahrpreis, der etwa dem vier- bis fünffachen der Betriebskosten eines privaten PKW entspricht. Interessant wäre es hingegen, durch eine Kostensenkung von dem mittleren Schnittpunkt zu dem linken Schnittpunkt zu gelangen, bei dem der Großteil des Mobilitätsbedarfs vom bedarfsgesteuerten öffentlichen Personennahverkehr bedient wird und dies kostendeckend ist. Mit der durch das erfindungsgemäße Verfahren erreichten Optimierung der Fahrtrouten der einzelnen Transportfahrzeuge wird dies ermöglicht.

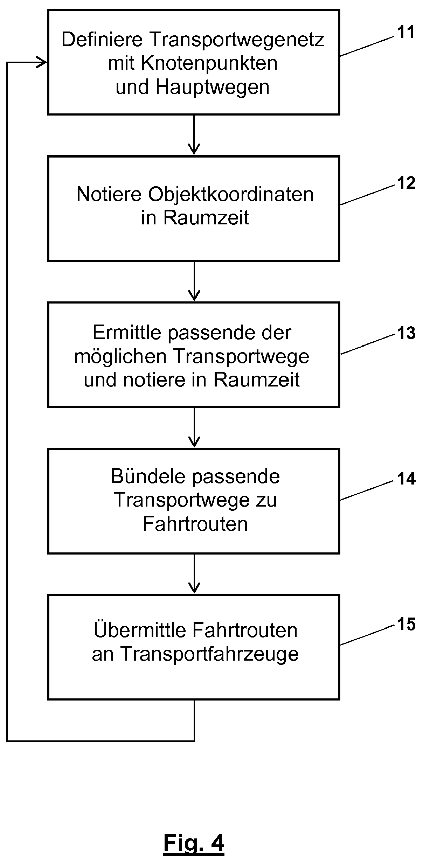

Das Ablaufdiagramm des erfindungsgemäßen Verfahrens gemäß **Fig. 4** beginnt mit einem Schritt 11, in dem ein Transportwegenetz für die zur Verfügung stehenden Transportfahrzeuge definiert wird. Das Transportwegenetz wird mit Knotenpunkten definiert, die durch Hauptwege verbunden sind, siehe Fig. 2. In einem Schritt 12 werden Objektkoordinaten, d. h. Startorte und zugehörige Startzeiten sowie Zielorte und zugehörige Zielzeiten von zu transportierenden Objekten, in der Raumzeit notiert. In einem Schritt 13 werden dann passende der nach dem Transportwegenetz möglichen Transportwege zwischen den Objektkoordinaten jedes Objekts ermittelt und in der Raumzeit notiert. In einem Schritt 14 werden passende Transportwege zu Fahrtrouten für die einzelnen Transportfahrzeuge gebündelt. Dabei werden die Transportkapazitäten und die Istorte der zur Verfügung stehenden Transportfahrzeuge beachtet. Weiterhin erfolgt im Schritt 14 ein Vergleich unterschiedlicher Bündelungen der Transportwege nach vorgegebenen Kriterien, um eine Bündelung zu selektieren, mit der eine maximal mögliche Erfüllung aller Kriterien erreicht wird. In einem Schritt 15 werden die Fahrtrouten an die am Transport der jeweiligen zu transportierenden Objekte beteiligten Transportfahrzeuge übermittelt, zusammen mit den Startorten und Startzeiten sowie Zielorten und Zielzeiten der von dem jeweiligen Fahrzeug zu transportierenden Objekte. Im laufenden Betrieb des Verfahrens läuft eine geschlossene Schleife über die Schritte 12 bis 15, so dass auch hinzukommende Objekte berücksichtigt werden können. Bei jeder Wiederholung des Schrittes 12 können dann als aktueller Startort und zugehörige Startzeit der schon in ein Transportfahrzeug aufgenommenen Objekte der Istort des jeweiligen Transportfahrzeugs und die Istzeit verwendet werden.

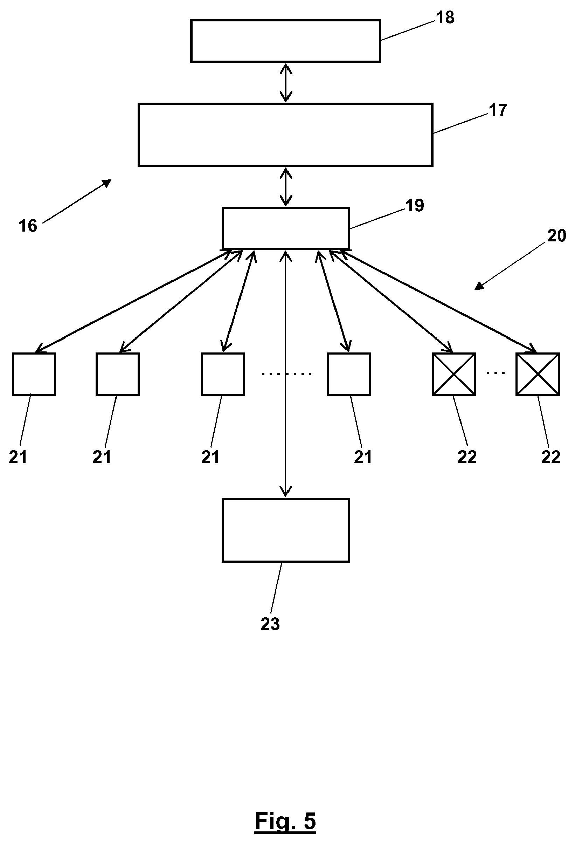

Der in **Fig. 5** als Blockdiagramm dargestellte Datenserver 16 umfasst einen Controller 17, der zur Durchführung des erfindungsgemäßen Verfahrens programmiert ist, eine Datenbank 18 zum Speichern einer Transportkapazität der Transportfahrzeuge und eines Transportwegenetzes von möglichen Transportwegen der Transportfahrzeuge mit Durchschnittsgeschwindigkeiten der Transportfahrzeuge auf den Transportwegen und eine Schnittstelle 19. Über die Schnittstelle 19 kommuniziert der Datenserver 16 beispielsweise über das Internet 20 und/oder über Mobilfunknetze mit Endgeräten 21 und 22. Die Endgeräte 21 mögen solche von Passagieren sein, die als Objekte in einem Anrufbus transportiert werden wollen, während die Endgeräte 22 solche in als Transportfahrzeuge dienenden Anrufbussen sind. Auf den Endgeräten 21 und 22 sind spezielle Anwendungsprogramme programmiert, die die Kommunikation der Benutzer der Endgeräte 21 und 22 mit dem Datenserver 16 vereinfachen. So kann ein potentieller Passagier zunächst beim Datenserver 16 anfragen, welche Transportmöglichkeit zu welchen Konditionen für ihn gegeben wäre, bevor er den Transport konkret anfordert. An den Endgeräten 22 können neben den von den einzelnen Transportfahrzeugen abzufahrenden Fahrtrouten z. B. auch die von den jeweiligen Fahrgästen zu verlangenden Fahrtentgelte ausgewiesen werden, um diese direkt durch den Fahrer des jeweiligen Transportfahrzeugs einzunehmen. Der Datenserver 16 kann über die Schnittstelle 19 aber auch mit einer Transportkostenabrechnungseinheit 23 kommunizieren, um an diese einen Kostenwert eines erfolgten Transports zu übermitteln, damit von dort ein bargeldloser Einzug des Fahrtentgelts erfolgt.

## Patentansprüche

1. Verfahren zum Transportieren einer Vielzahl von Objekten mit mehreren Transportfahrzeugen,
- wobei zu jedem Objekt ein Startort und ein Zielort sowie eine Startzeit und/oder eine Zielzeit notiert werden,
- wobei zu jedem Transportfahrzeug eine Transportkapazität und ein Istort notiert werden und
- wobei ein Transportwegenetz von möglichen Transportwegen der Transportfahrzeuge mit Durchschnittsgeschwindigkeiten der Transportfahrzeuge auf den Transportwegen definiert wird,
**dadurch gekennzeichnet,**
- **dass** für jedes Objekt sein Startort und sein Zielort sowie die jeweils zugehörige Startzeit und/oder Zielzeit als Objektkoordinaten in einer Raumzeit notiert werden,
- **dass** für jedes Objekt anhand des Transportwegenetzes passende aller möglichen Transportwege zwischen seinen Objektkoordinaten ermittelt und in der Raumzeit notiert werden,
- **dass** in der Raumzeit passende Transportwege für verschiedene Objekte zu Fahrtrouten einzelner Transportfahrzeuge gebündelt werden, wobei die Transportkapazitäten und die Istorte der Transportfahrzeuge beachtet werden, und
- **dass** die Fahrtrouten mit den Startorten, den Startzeiten, den Zielorten und den Zielzeiten der zugehörigen Objekte zum Abfahren an die beteiligten Transportfahrzeuge übermittelt werden.

2. Verfahren nach Anspruch 1, **dadurch gekennzeichnet, dass** die Istorte der Transportfahrzeuge beachtet werden, indem sie als Fahrzeugkoordinaten in der Raumzeit notiert werden und indem anhand des Transportwegenetzes passende der möglichen Transportwege zwischen den Fahrzeugkoordinaten und benachbarten Objektkoordinaten von Startorten und zugehörigen Startzeiten ermittelt, in der Raumzeit notiert und beim Bündeln berücksichtigt werden.

3. Verfahren nach Anspruch 1 oder 2, **dadurch gekennzeichnet,**
- **dass** Zeiträume, die zum Aufnehmen eines Objekts in ein Transportfahrzeug und zum Ausgeben eines Objekts aus einem Transportfahrzeug benötigt werden, notiert und beim Notieren der passenden Transportwege in der Raumzeit berücksichtigt werden und/oder
- **dass** die Startzeiten und/oder die Zielzeiten der Objekte als Zeitfenster, optional als Zeitfenster individueller Breite, notiert werden.

4. Verfahren nach einem der vorhergehenden Ansprüche, **dadurch gekennzeichnet, dass** zusätzlich Startorte und Zielorte sowie Startzeiten und Zielzeiten vorhandener Linienverkehrsmittel, die innerhalb eines Zeitraums zwischen der Startzeit und der Zielzeit mindestens eines der Objekte liegen, in der Raumzeit notiert werden und dass beim Ermitteln der für das mindestens eine der Objekte passenden Transportwege solche Transportwege berücksichtigt werden, auf denen das mindestens eine der Objekte eine Teilstrecke von dem Linienverkehrsmittel transportiert wird.

5. Verfahren nach einem der vorhergehenden Ansprüche, **dadurch gekennzeichnet, dass** die Transportkapazität zu jedem Transportfahrzeug in Form einer bestimmten Anzahl von Objekten notiert wird, wobei optional zu jedem Transportfahrzeug dieselbe Transportkapazität notiert wird.

6. Verfahren nach einem der vorhergehenden Ansprüche, **dadurch gekennzeichnet,**
- **dass** in dem Transportwegenetz Knotenpunkte verbindende Hauptwege definiert werden und beim Ermitteln passender aller möglichen Transportwege für jedes Objekt anhand des Transportwegenetzes die möglichen Transportwege auf solche eingeschränkt werden, die
- von dem Startort des Objekts zu einem der dem Startort nächstliegenden Knotenpunkte,
- zu dem Zielort des Objekts von einem der dem Zielort nächstliegenden Knotenpunkte und
- zwischen den Knotenpunkten ausschließlich auf den Hauptwegen verlaufen,
- wobei optional in dem Transportwegenetz Knotenzentren verbindende Hauptstrecken definiert werden und beim Ermitteln passender aller möglichen Transportwege für jedes Objekt anhand des Transportwegenetzes die möglichen Hauptwege auf solche eingeschränkt werden, die
- von dem einen der dem Startort nächstliegenden Knotenpunkte zu einem der diesem Knotenpunkt nächstliegenden Knotenzentren,
- zu dem einen der dem Zielort nächstliegenden Knotenpunkte von einem der diesem Knotenpunkt nächstliegenden Knotenzentren und
- zwischen den Knotenzentren ausschließlich auf den Hauptstrecken verlaufen.

7. Verfahren nach einem der vorhergehenden Ansprüche, **dadurch gekennzeichnet, dass** beim Bündeln aus den passenden Transportwegen verschiedene Kombinationen möglicher Fahrtrouten einzelner Transportfahrzeuge zusammengestellt und miteinander verglichen werden.

8. Verfahren nach einem der vorhergehenden Ansprüche, **dadurch gekennzeichnet, dass** beim Bündeln eine Optimierung hinsichtlich mindestens eines der folgenden Kriterien durchgeführt wird:
- Einhaltung der Startzeiten und/oder der Zielzeiten zumindest bestimmter der Objekte,
- minimierte Abweichungen von den Startzeiten und/oder den Zielzeiten aller Objekte,
- maximierte mittlere Auslastung der Transportkapazität der genutzten Transportfahrzeuge,
- minimierte Fahrtstrecken der genutzten Transportfahrzeuge,
- minimierte Betriebszeiten der genutzten Transportfahrzeuge,
- minimierte Betriebskosten der genutzten Transportfahrzeuge.

9. Verfahren nach einem der vorhergehenden Ansprüche, **dadurch gekennzeichnet, dass** bei hinzukommenden zu transportierenden Objekten deren Startorte und Zielorte sowie Startzeiten und/oder Zielzeiten sowie passende Transportwege ergänzt werden, das Bündeln zu den Transportrouten unter Berücksichtigung der aktuellen Istorte der Transportfahrzeuge, ihrer aktuellen Beladung mit Objekten und deren Zielorten und Zielzeiten erneut durchgeführt wird und sich daraus ergebende neue Fahrtrouten an die beteiligten Transportfahrzeuge übermittelt werden.

10. Verfahren nach einem der vorhergehenden Ansprüche, **dadurch gekennzeichnet, dass** die Objekte Passagiere sind.

11. Verfahren nach einem der vorhergehenden Ansprüche, **dadurch gekennzeichnet, dass** die erfolgten Transporte der Objekte mit den Transportfahrzeugen erfasst werden und dass den erfolgten Transporten nach einem vorgegebenen Tarif ein Kostenwert zugeordnet wird, wobei der Kostenwert, optional, an mindestens eine Transportkostenabrechnungseinheit übermittelt wird.

12. Datenserver (16) mit
- einer Schnittstelle (19) zum Empfangen von Startorten und Zielorten sowie Startzeiten und/oder Zielzeiten einer Vielzahl von Objekten und zum Empfangen von Istorten einer Mehrzahl von Transportfahrzeugen und
- einer Datenbank (18) zum Speichern einer Transportkapazität der Transportfahrzeuge und eines Transportwegenetzes von möglichen Transportwegen der Transportfahrzeuge mit Durchschnittsgeschwindigkeiten der Transportfahrzeuge auf den Transportwegen,
- wobei die mindestens eine oder eine weitere Schnittstelle (19) zum Ausgeben von Fahrtrouten an beteiligte Transportfahrzeuge vorgesehen ist,
**dadurch gekennzeichnet, dass** der Datenserver (16) zur Durchführung des Verfahrens nach einem der vorhergehenden Ansprüche programmiert ist.

13. Datenserver (16) nach Anspruch 12, **dadurch gekennzeichnet, dass** die mindestens eine und/oder die weitere Schnittstelle (19) zur Datenkommunikation mit mobilen Endgeräten ausgebildet ist, wobei die mobilen Endgeräte (21, 22) optional Tablets, Mobiltelefone, Smartphones oder PDAs sind und wobei die mindestens eine und/oder die weitere Schnittstelle (19) optional zur Datenkommunikation mit dem mobilen Endgerät (21, 22) über ein Anwenderprogramm ausgebildet ist, das auf dem mobilen Endgerät programmiert ist.

14. Datenserver (16) nach Anspruch 13, **dadurch gekennzeichnet, dass** die mindestens eine oder die weitere oder noch eine weitere Schnittstelle (19) zum Übermitteln eines Kostenwerts eines erfolgten Transports an mindestens eine Transportkostenabrechnungseinheit (23) vorgesehen ist, bei der es sich, optional, um den Mobilfunkanbieter des Benutzers des jeweiligen mobilen Endgeräts (21) handelt.

15. Datenserver (16) nach Anspruch 13 oder 14, **dadurch gekennzeichnet, dass** die mindestens eine oder die weitere oder noch eine weitere oder eine zusätzliche Schnittstelle (19) zum Übermitteln von Objektdaten zu den Objekten an ein Anzeigegerät vorgesehen ist, das sich in oder an dem den Transport der jeweiligen Objekte durchführenden Transportfahrzeug befindet.
